(19) Europäisches Patentamt
European Patent Office
Office européen des brevets

(11) EP 0 933 420 B1

(12) **FASCICULE DE BREVET EUROPEEN**

(45) Date de publication et mention de la délivrance du brevet:
**01.12.2004 Bulletin 2004/49**

(51) Int Cl.7: **A23L 1/226**, C11B 9/00, C07C 31/125, C07C 29/40

(21) Numéro de dépôt: **99100538.0**

(22) Date de dépôt: **13.01.1999**

(54) **Utilisation du 2,5,6-trimethyl-2-heptanol en parfumerie et en tant qu'agent aromatisant**

Verwendung des 2,5,6-Trimethyl-2-heptanol als Riech- und Geschmacksstoff

Use of 2,5,6,-trimethyl-2-heptanol as a perfuming and a flavouring agent

(84) Etats contractants désignés:
**CH DE ES FR GB IT LI NL**

(30) Priorité: **03.02.1998 CH 24898**

(43) Date de publication de la demande:
**04.08.1999 Bulletin 1999/31**

(73) Titulaire: **FIRMENICH SA**
**1211 Genève 8 (CH)**

(72) Inventeur: **Giersch, Wolfgang**
**1233 Bernex (CH)**

(74) Mandataire:
**Salvaterra-Garcia, Maria de Lurdes, Dr.**
**Firmenich SA**
**Case Postale 239**
**1211 Genève 8 (CH)**

(56) Documents cités:
**EP-A- 0 042 734** **EP-A- 0 237 978**
**DE-A- 3 341 606**

- **DATABASE WPI Section Ch, Week 198333 Derwent Publications Ltd., London, GB; Class D25, AN 1983-738953 XP002133244 & JP 58 117294 A (LION CORP), 12 juillet 1983 (1983-07-12)**
- **CHEMICAL ABSTRACTS, vol. 117, no. 22, 30 novembre 1992 (1992-11-30) Columbus, Ohio, US; abstract no. 219704, XP002133243 & FORD ET AL : "2,6-dimethyl-2-heptanol " FOOD CHEM. TOXICOL., vol. 30, no. 23s, 1992, englewood cliffs, NJ, USA**
- **K.H. SCHULTE-ELTE ET AL: "An alternative access to irones" HELVETICA CHIMICA ACTA, vol. 75 , 1992, pages 759-765, XP002133242 VERLAG HELVETICA CHIMICA ACTA, BASEL.; CH**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 933 420 B1

Printed by Jouve, 75001 PARIS (FR)

## Description

La présente invention a trait au domaine des fragrances et des arômes. Elle concerne, plus particulièrement, l'utilisation d'un composé de formule

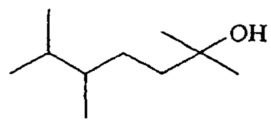

ou 2,5,6-triméthyl-2-heptanol, en tant qu'ingrédient parfumant et ingrédient aromatisant.

Le composé qui fait l'objet de la présente invention est connu depuis fort longtemps et est mentionné dans l'oeuvre connue sous le nom de "Beilstein". Cependant, malgré la connaissance de ce composé chimique, on ne trouve nulle part une description de son odeur ou de son goût, ou même une proposition de son suggestion en parfumerie ou dans le domaine des arômes.

L'objet de la présente invention est donc l'utilisation du 2,5,6-triméthyl-2-heptanol en parfumerie, ainsi que des compositions parfumantes ou articles parfumés contenant ce composé. Un autre objet de l'invention est l'utilisation du 2,5,6-triméthyl-2-heptanol en tant qu'ingrédient aromatisant et les aliments contenant ledit composé.

Nous avons maintenant synthétisé ce composé et trouvé, d'une façon surprenante, qu'il dispose de qualités olfactives et gustatives excellentes qui le rendent très utile en tant qu'ingrédient parfumant et aromatisant.

L'odeur du 2,5,6-triméthyl-2-heptanol est une odeur de type floral, plus précisément une note de type fleur blanche, à connotation linalol-freesia. Les experts parfumeurs qui ont évalué ce composé ont également constaté qu'il possédait une sous-note de type fruité, accompagnée d'un joli côté velouté très apprécié.

Ces propriétés olfactives sont d'autant plus étonnantes que l'on connaît, dans le domaine de la parfumerie, un nombre d'alcools terpéniques tertiaires, saturés ou insaturés, dont quelques-uns d'un usage répandu, qui, cependant, ne possèdent pas les avantages du composé de l'invention. En tant qu'exemples non exhaustifs, on peut citer l'éthyllinalol, le tétrahydrolinalol, et, bien sûr, le linalol lui-même. Par rapport aux composés connus ayant tous une structure très proche de celle du 2,5,6-triméthyl-2-heptanol, ce dernier porte un substituant méthyle en position $\delta$ par rapport au groupe alcool. Cette variation de la structure donne lieu à une modification significative et surprenante des propriétés olfactives et d'autres paramètres importants en parfumerie.

L'odeur du 2,5,6-triméthyl-2-heptanol, à part la qualité de sa note olfactive caractéristique décrite en haut, se montre aussi tenace, très élégante, et, de surcroît, très puissante. En ce qui concerne le linalol, sa note est moins puissante et moins élégante, mais surtout moins tenace. Les odeurs de l'éthyllinalol et du tétrahydrolinalol se montrent nettement moins puissantes et aussi moins élégantes. De plus, en ce qui concerne le 2,6-diméthyl-2-heptanol (origine : Givaudan-Roure, Vernier, Suisse), le composé de l'invention présente une odeur qui est de loin plus douce, plus proche de la bergamote, et presque poudrée-vanillée, que ce composé connu, qui lui développe une odeur plus agressive, piquante, avec un côté herbacé.

La présente invention concerne également les deux énantiomères du 2,5,6-triméthyl-2-heptanol de l'invention. La qualité ainsi que la puissance de l'odeur de chacun de ces deux énantiomères a aussi été évaluée, et ils se révèlent être également des ingrédients parfumants utiles, possédant des qualités similaires à celles du racémate décrit plus haut.

Le (+)-(R)-2,5,6-triméthyl-2-heptanol possède une odeur typique des fleurs blanches, rappelant l'odeur du linalol et une légère connotation de terpinéol-lilas. La présence d'une sous-note fruitée a également été constatée.

L'odeur de son énantiomère de configuration (-)-(S)- est plus fleurie-hespéridée, avec une nuance réminiscente de l'odeur du diméthyloctanol et une connotation savonneuse et légèrement aldéhydée. D'une façon générale, l'impression olfactive est moins lilas et plus rosé-muguet que celle de son énantiomère de configuration (+)-(R).

Le 2,5,6-triméthyl-2-heptanol, sous forme d'un mélange racémique ou d'un énantiomère pur, apporte donc une nouvelle note de type fleuri à la palette du parfumeur. Grâce aux avantages exposés plus haut, ledit composé est approprié pour une utilisation dans un grand nombre d'applications potentielles en parfumerie.

Le 2,5,6-triméthyl-2-heptanol se prête à être utilisé dans pratiquement tous les domaines de la parfumerie moderne. A ce titre, il convient de citer l'application en parfumerie fonctionnelle, plus particulièrement dans des savons, des gels de douche ou de bain, des shampoings, des déodorants et antiperspirants, des désodorisants d'air ambiant, des détergents liquides ou solides destinés au traitement de textiles, des compositions détergentes ou produits d'entretien destinés au nettoyage de la vaisselle ou de surfaces variées, ou dans des préparations cosmétiques.

Le composé selon l'invention s'est aussi montré stable dans des milieux difficiles et agressifs, comme par exemple des détergents textiles contenant des agents et activateurs de blanchissage tels la tétraacétyléthylènediamine (TAED), des hypohalites, hypochlorite en particulier, se trouvant dans l'eau de Javel, des agents de blanchissage

peroxygénés tels que les perborates, les déodorants contenant des sels d'aluminium, ou les adoucissants textiles.

Bien entendu, son utilisation n'est cependant pas limitée aux produits mentionnés plus haut, et ce composé se prête également à l'emploi en parfumerie fine, à savoir la préparation de parfums et eaux de toilette.

Dans ces applications, le 2,5,6-triméthyl-2-heptanol peut être utilisé seul ou en mélange avec d'autres ingrédients parfumants, des solvants ou adjuvants d'usage courant en parfumerie. La nature et variété de ces coingrédients n'appelle pas une description plus détaillée ici, qui ne saurait d'ailleurs être exhaustive, l'homme de métier étant à même de les choisir de par ses connaissances générales et en fonction de la nature du produit à parfumer et de l'effet olfactif recherché. Ces coingrédients parfumants appartiennent à des classes chimiques aussi variées que les alcools, aldéhydes, cétones, esters, éthers, acétates, nitriles, hydrocarbures terpéniques, composés hétérocycliques azotés ou soufrés, ainsi que des huiles essentielles d'origine naturelle ou synthétique. Beaucoup de ces ingrédients sont d'ailleurs répertoriés dans des textes de référence tels que le livre de S. Arctander, Perfume and Flavor Chemicals, 1969, Montclair, New Jersey, USA, ou ses versions plus récentes, ou dans d'autres oeuvres de nature similaire.

Les proportions dans lesquelles le composé selon l'invention peut être incorporé dans les produits divers susmentionnés varient dans une gamme de valeurs étendue. Ces valeurs sont dépendantes de la nature de l'article ou produit que l'on veut parfumer et de l'effet olfactif recherché, ainsi que de la nature des coingrédients dans une composition donnée lorsque le composé de l'invention est utilisé en mélange avec des coingrédients parfumants, des solvants ou des adjuvants d'usage courant dans l'art.

A titre d'exemple, on peut citer des concentrations typiques de l'ordre de 1 à 10%, voire même 20% ou plus, en poids de ce composé, par rapport au poids de composition parfumante dans laquelle il est incorporé. Des concentrations bien inférieures à celles-ci peuvent être utilisées lorsque ce composé est appliqué dans le parfumage des produits de consommation divers cités auparavant.

Par ailleurs, comme il ressort des exemples présentés plus loin, il a été constaté que le 2,5,6-triméthyl-2-heptanol se révèle particulièrement utile pour préparer des reconstitutions de type freesia, dans lesquelles il remplace très avantageusement le linalol.

Le composé de l'invention est aussi un ingrédient aromatisant utile. Son goût est décrit comme étant floral et boisé, ayant une certaine réminiscence du goût du linalol et une sous-note ressemblant au goût de l'α-terpinéol. Le composé peut être utilisé dans des aliments, boissons, gommes à mâcher ou des préparations pharmaceutiques, et il s'est montré particulièrement approprié pour une utilisation dans des arômes de type fruité-sucré. Un domaine préféré est son utilisation dans des applications du type thé, pêche ou miel, où son profil organoleptique est très apprécié et peut être utilisé pour souligner le caractère fruité, doux et crémeux des aliments dans lesquels il a été incorporé.

Si le composé de l'invention est incorporé dans des compositions aromatisantes utilisées dans les produits susmentionnés, il sera utilisé dans des concentrations comprises entre environ 1 et 20% en poids par rapport au poids total de la composition aromatisante.

Le composé selon l'invention est synthétisé à partir du 2-isopropyl-2-propénal [voir Schulte-Elte et al., Helvetica Chimica Acta 75, 759 (1992)] en utilisant une synthèse à trois étapes. Cette synthèse est illustrée dans le schéma I suivant.

Schéma I

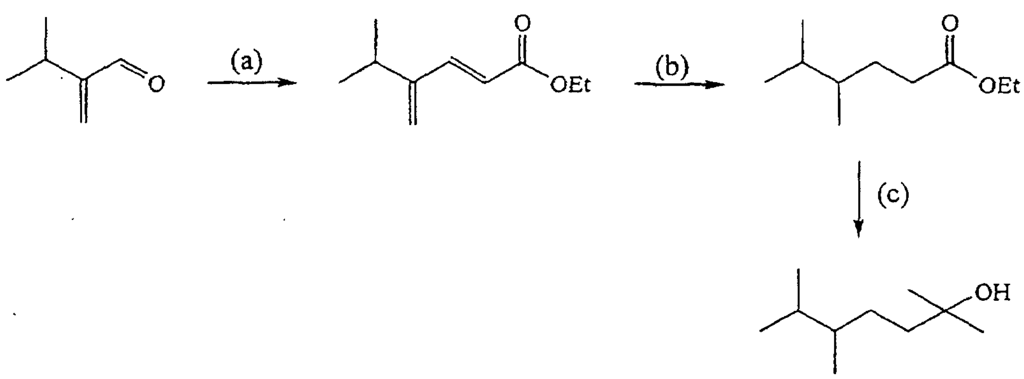


(a) $(EtO)_2P(O)CH_2CO_2Et$ / NaOEt
(b) Pd / C
(c) MeMgI
Et = éthyle

Me = méthyle

Le 2-isopropyl-2-propénal est transformé en 4-isopropyl-2,4-pentadienoate d'éthyle à l'aide d'une réaction dite de Wittig-Horner. Le composé ainsi obtenu est ensuite hydrogéné à l'aide de palladium sur charbon actif, et l'on transforme le 4,5-diméthylhexanoate d'éthyle formé, en le faisant réagir avec 2 équivalents de $CH_3MgI$, dans le produit selon l'invention.

Pour la synthèse des énantiomères (R) et (S) du 2,5,6-triméthyl-2-heptanol, on a eu recours à une synthèse à 7 étapes qui utilise le (+)-(R)-, respectivement le (-)-(S)-citronellal, en tant que produit de départ et qui est indiquée dans le schéma II suivant. Les configurations absolues des deux 2,5,6-triméthyl-2-heptanols énantiomériques ont été attribuées par analogie avec le produit de départ, toutes les réactions indiquées se déroulant avec rétention de la configuration.

Schéma II

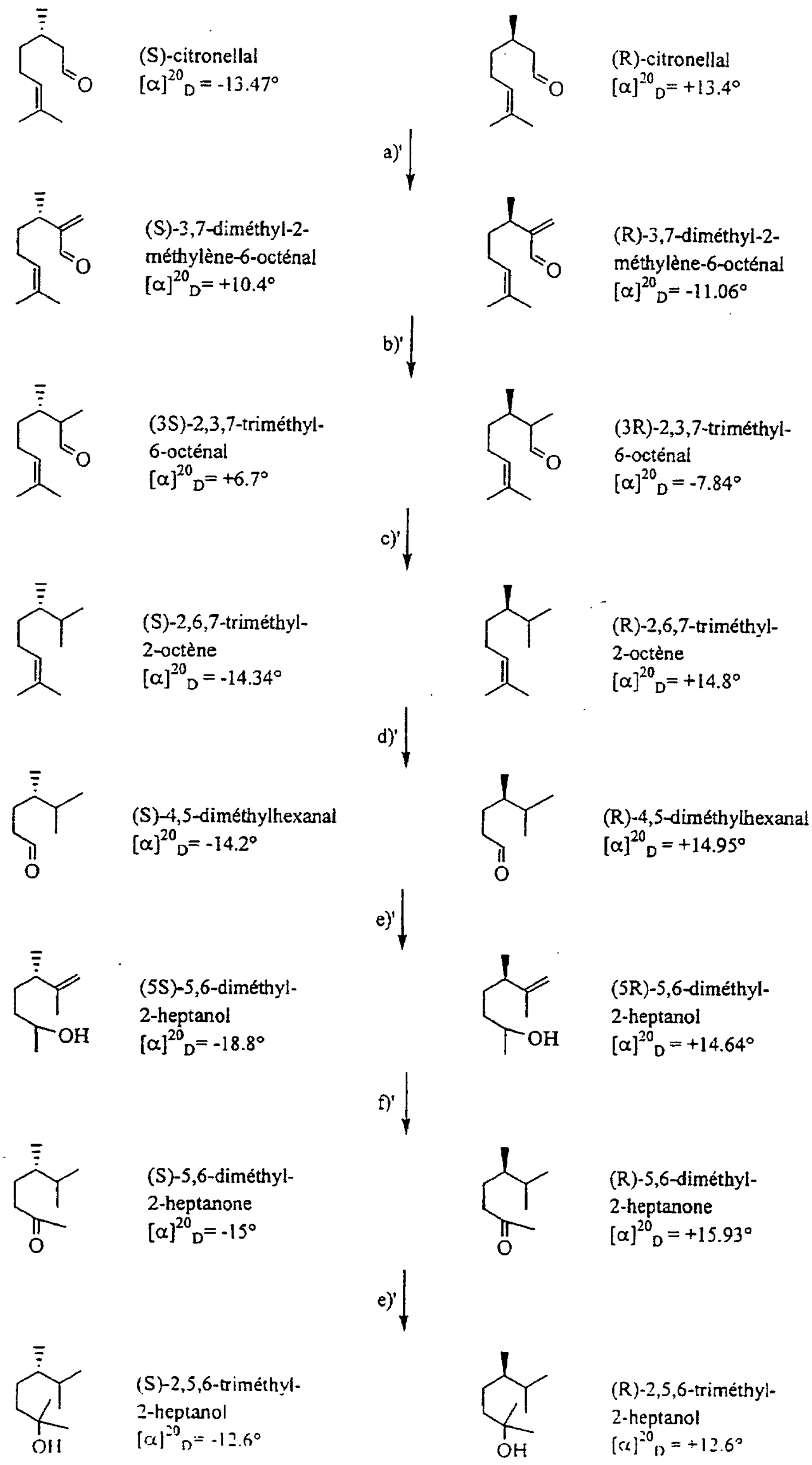


(S)-citronellal
$[\alpha]^{20}_D$ = -13.47°

(R)-citronellal
$[\alpha]^{20}_D$ = +13.4°

(S)-3,7-diméthyl-2-méthylène-6-octénal
$[\alpha]^{20}_D$ = +10.4°

(R)-3,7-diméthyl-2-méthylène-6-octénal
$[\alpha]^{20}_D$ = -11.06°

(3S)-2,3,7-triméthyl-6-octénal
$[\alpha]^{20}_D$ = +6.7°

(3R)-2,3,7-triméthyl-6-octénal
$[\alpha]^{20}_D$ = -7.84°

(S)-2,6,7-triméthyl-2-octène
$[\alpha]^{20}_D$ = -14.34°

(R)-2,6,7-triméthyl-2-octène
$[\alpha]^{20}_D$ = +14.8°

(S)-4,5-diméthylhexanal
$[\alpha]^{20}_D$ = -14.2°

(R)-4,5-diméthylhexanal
$[\alpha]^{20}_D$ = +14.95°

(5S)-5,6-diméthyl-2-heptanol
$[\alpha]^{20}_D$ = -18.8°

(5R)-5,6-diméthyl-2-heptanol
$[\alpha]^{20}_D$ = +14.64°

(S)-5,6-diméthyl-2-heptanone
$[\alpha]^{20}_D$ = -15°

(R)-5,6-diméthyl-2-heptanone
$[\alpha]^{20}_D$ = +15.93°

(S)-2,5,6-triméthyl-2-heptanol
$[\alpha]^{20}_D$ = -12.6°

(R)-2,5,6-triméthyl-2-heptanol
$[\alpha]^{20}_D$ = +12.6°

(a)' hydrochlorure de diéthylamine, formaldéhyde, reflux à pH 7-8 pendant 6 h
(b)' Pd/$CaCO_3$ 5% (pentane), traces de quinoléine
(c)' hydrazine, NaOH (diéthylène glycol), reflux pendant 1 h
(d)' ozone (acétate d'éthyle), triphénylphosphine
(e)' MeMgI
(f)' chlorochromate de pyridinium ($CH_2Cl_2$)

Dans l'étape (a)', on soumet le citronellal à une réaction dite de Mannich, suivie d'une hydrogénation du groupe méthylène (b)', une réduction dite de Huang-Minlon (c)', l'ozonolyze de la double liaison (d)', une première réaction de Grignard (e)', l'oxydation du groupe hydroxy par le pyridinium chlorochromate (f)' et une autre réaction de Grignard (e)'. Le composé désiré de configuration (R) ou (S) est obtenu à l'état pur.

L'invention est maintenant illustrée de façon plus détaillée dans les exemples suivants dans lesquels les abréviations ont le sens usuel dans l'art. Les températures sont indiquées en degrés Celsius et les données RMN (déplacement chimique δ) sont indiquées en ppm par rapport au TMS en tant que standard interne.

Exemple 1

Préparation du 2,5,6-triméthyl-2-heptanol sous forme de racémate

a) Préparation du 4-isopropyl-2,4-pentadiénoate d'éthyle

10 g (102 mmol) de 2-isopropyl-2-propénal et 22,9 g (102 mmol) de diéthylphosphonylacétate d'éthyle ont été dissous dans 50 ml de pentane. On a ajouté de l'éthanolate de sodium qui a été préparé à partir de 3 g de sodium (130 mmol) et 60 ml d'éthanol, sous agitation. La réaction a été continuée pendant 15 h à température ambiante, et le mélange réactionnel a ensuite été versé sur de la glace, lavé à la saumure et, après évaporation du solvant, distillé à 100°C/15 hPa pour fournir 10,1 g (59%) de produit pur.

RMN($^1H$) : 1,11(d, J=6,8, 6H) ; 1,31(t, J=7,2, 3H) ; 2,6(h, J=6,8, 1H); 4,22(q, J=7,2, 2H); 5,32 et 5,36(2s, 2H); 5,97 (d, J=16, 1H); 7,31(d, J=16, 1H) δppm
SM : 168($M^+$, 40), 153(23), 139(10), 125(58), 95(100), 79(69), 67(54), 55(41), 41 (67), 27(85).

b) Préparation du 4,5-diméthylhexanoate d'éthyle

5 g (30 mmol) du produit obtenu dans l'étape a) ont été dissous dans 50 ml d'acétate d'éthyle, et on a ajouté 50 mg de palladium sur charbon actif. On a ensuite procédé à une hydrogénation pendant 24 h à température ambiante. La solution a été filtrée et le filtrat distillé pour obtenir le produit souhaité, à 110°C/15 hPa, et dans un rendement de 3,6 g (70%).

RMN($^1H$) : 1,32(d, J=6,8, 3H); 1,33(d, J=6,8, 3H); 1,37(d, J=7,2, 3H); 1,27(t, J=7,2, 3H); 4,12(q, J=7,2, 2H) δppm
SM : 172($M^+$, 0), 157(1), 129(33), 101(100), 88(75), 55(69), 43(70), 29(57).

c) Préparation du 2,5,6-triméthyl-2-heptanol

20 g (116 mmol) du produit obtenu dans l'étape b) ont été dissous dans 100 ml d'éther diéthylique et ajoutés, à température ambiante, à du $CH_3MgI$ qu'on avait préparé préalablement à partir de magnésium et de $CH_3I$. Le mélange réactionnel a été porté à reflux suite à la réaction exothermique. Après 4 h, le mélange, après avoir été refroidi à température ambiante, a été versé sur un mélange de NaOH/glace et extrait deux fois à l'éther. On a lavé à la saumure/ eau et séché. Après évaporation du solvant, le produit a été distillé à 32°C/0,2 hPa, pour obtenir 16,3 g (88,7%) du produit souhaité.

RMN($^1H$) : 0,82(d, J=6,8, 6H); 0,88(d, J=6,8, 3H); 1,22(s, 6H) δppm
SM : 158($M^+$, 0), 143(2), 125(1), 97(3), 83(6), 69(16), 59(100), 43(20).

Exemple 2

Préparation d'une composition parfumante pour un détergent

On a préparé, à partir des ingrédients suivants, une composition destinée au parfumage d'un détergent :

| Ingrédients | Parties en poids |
|---|---|
| Acétate de linalyle | 400 |
| Acétate de tricyclo[5.2.1.0.(2,6)]déc-3-èn-8-yle | 50 |
| Aldéhyde hexylcinnamique | 400 |
| Allyl amyl glycolate | 10 |
| Cetalox ® 1) | 20 |
| Citronellol | 50 |
| Coumarine | 40 |
| Dihydromyrcénol 2) | 300 |
| Galaxolide ® 3) | 40 |
| Géraniol | 70 |
| Habanolide ®4)* | 520 |
| Hédione ® 5) | 500 |
| Iso E Super 6) | 300 |
| Jasmal 7) | 60 |
| Lilial ®8) | 100 |
| Dynascone ®9) à 10% * | 50 |
| (Z)-Jasmone à 10% * | 40 |
| Phénylhexanol | 100 |
| Salicylate d'hexyle | 230 |
| Salicylate de (Z)-3-hexénol | 30 |
| β-Ionone | 150 |
| (+)-(1S,2S,3S)-2,6,6-Triméthyt-bicyclo[3.1.1]heptane-3-spiro-2'-cyclohexén-4'-one 10) à 50% * | 100 |
| Wardia ® 11) | 40 |
| Total | 3600 |

* dans le dipropylène glycol
1) 8,12-époxy-13,14,15,16-tétranorlabdane ; origine : Firmenich SA, Genève, Suisse
2) 2,6-diméthyl-7-octen-2-ol ; origine : International Flavors & Fragrances, USA
3) origine : International Flavors & Fragrances, USA
4) mélange de 1-oxa-12-cyclohexadécén-2-one et 1-oxa-13-cyclohexadécén-2-one; origine : Firmenich SA. Genève, Suisse
5) dihydrojasmonate de méthyle ; origine : Firmenich SA, Genève, Suisse
6) origine : International Flavors & Fragrances, USA
7) mélange de diacétate de 1,3-nonanediyle et d'acétate de tétrahydro-3-pentyl- 4-(2H)-pyranyle ; origine : International Flavors & Fragrances, USA
8) origine : Givaudan-Roure SA, Vernier, Suisse
9) 1-(5,5-diméthyl-1-cyclohexen-1-yl)-4-penten-1-one; origine: Firmenich SA, Genève, Suisse
10) origine : Firmenich SA, Genève, Suisse
11) composition à odeur de rose ; origine : Firmenich SA, Genève, Suisse

Si l'on ajoute à cette composition de base 400 parties en poids du 2,5,6-triméthyl-2-heptanol, on lui apporte une note très fleurie-fruitée, typique des freesias, qui en plus montre une jolie sous-note fruitée-muguet qui s'avère très naturelle.
En rajoutant les mêmes quantités de dihydrolinalol ou de linalol, respectivement, on obtient des compositions dont la note est nettement moins élégante et veloutée et moins fleurie-fruitée. Ces deux derniers composés se montrent, d'une façon générale, moins performants dans ce type de composition.

Exemple 3

Préparation d'un accord de type fleuri-freesia

On a préparé un accord de base en mélangeant les ingrédients suivants :

| Ingrédients | Parties en poids |
|---|---|
| Anthranilate de méthyle | 15 |

(suite)

| Ingrédients | Parties en poids |
|---|---|
| Famesène | 10 |
| Absolue de fleur d'oranger à 10% * | 10 |
| Géraniol | 5 |
| Hédione ®1) | 10 |
| Ocimène à 10% * | 10 |
| Isobutyrate de (Z)-3-hexénol à 10% * | 30 |
| Limonène | 10 |
| Oxyde de linalyle | 10 |
| α-Terpinéol | 55 |
| α-Ionone | 5 |
| β-Ionone | 30 |
| Total | 200 |

* dans le dipropylène glycol
1) voir exemple 2

A cette composition de base on a ajouté du 2,5,6-triméthyl-2-heptanol et du linalol, respectivement, jusqu'à ce que la composition contienne 80% en poids de l'un ou l'autre de ces composés, pour obtenir une reconstitution de type freesia. On a constaté que le 2,5,6-triméthyl-2-heptanol pouvait non seulement remplacer le linalol dans ce type de reconstitution, mais conférait également un caractère nettement plus naturel, élégant et freesia à la composition. Si l'on ajoute la même quantité de 2,6-diméthyl-2-heptanol à cette composition de base, celle-ci prend un caractère nettement plus aldéhydé-floral et herbacé-piquant, aussi moins doux et naturel qu'avec le composé de l'invention. L'odeur typique du freesia, fleur blanche, magnolia qui est conférée par le composé de l'invention était complètement absent lorsque celui-ci a été remplacé par le 2,6-diméthyl-2-heptanol.

Exemple 4

Préparation d'un parfum à caractère "ginger-lily"

| Ingrédients | Parties en poids |
|---|---|
| Acétate de benzyle | 70 |
| Acétate de phenyléthyle | 10 |
| Anisate de méthyle | 7 |
| Anthranilate de méthyle | 5 |
| Benzoate de benzyle | 123 |
| Benzoate d'isobutyle | 7 |
| Benzoate de méthyle | 5 |
| Butyrate de benzyle | 10 |
| Caryophyllène | 7 |
| Citral | 1 |
| Estragole | 5 |
| Eugénol | 1 |
| Géraniol | 7 |
| Hédione ®1) | 55 |
| Indol | 5 |
| Isobutyrate de benzyle | 10 |
| Isobutyrate de (Z)-3-hexényle à 10% * | 5 |

* dans le dipropylène glycol
1) voir exemple 2

(suite)

| Ingrédients | Parties en poids |
|---|---|
| Limonène | 5 |
| Méthylnaphtylcétone | 7 |
| Méthyleugénol | 3 |
| Benzoate de (Z)-3-hexényle | 15 |
| (Z)-Jasmone | 70 |
| (E)-8-Decén-5-olide [2)] | 20 |
| (Z)-3-Hexénol | 7 |
| Propionate de benzyle | 15 |
| α-Terpinéol | 35 |
| Vanilline | 10 |
| Total | 520 |

2) origine : Firmenich SA, Genève, Suisse

A cette composition de base reconstituant les caractéristiques odorantes du produit naturel, on a ajouté 80 parties en poids du 2,5,6-triméthyl-2-heptanol et comparé aux résultats obtenus avec des compositions similaires contenant la même quantité de tétrahydrolinalol, d'éthyllinalol ou de linalol, respectivement. Par rapport à l'addition de tétrahydrolinalol ou d'éthyllinalol, la composition nouvelle selon l'invention avait acquis un caractère naturel de fleur blanche beaucoup plus élégant que celui des autres compositions contenant ces ingrédients connus susmentionnés. Par rapport au linalol, on a obtenu, avec le composé de l'invention, une composition dont l'odeur ressemblait certes moins au produit naturel, mais qui était plus riche et plus veloutée et donnait une impression nettement plus élégante.

Exemple 5

Préparation d'un arôme du type miel

On a mélangé les ingrédients suivants pour obtenir un arôme du type miel :

| Ingrédients | Parties en poids |
|---|---|
| Acide phénylacétique | 100 |
| Benzaldéhyde | 25 |
| β-Damascone (à 1% dans le propylène glycol) | 10 |
| Furanéol ® [1)] | 10 |
| Phénylacétate d'éthyle | 25 |
| Vanilline | 20 |
| Propylène glycol | 760 |
| 2,5,6-Triméthyl-2-heptiol | 50 |
| Total | 1000 |

1) 4-hydroxy-2,5-diméthyl-3(2H)-furanone ; origine : Firmenich SA, Genève, Suisse

Exemple 6

Préparation d'un arôme du type pêche

On a mélangé les ingrédients suivants pour obtenir un arôme du type pêche :

| Ingrédients | Parties en poids |
|---|---|
| Acétaldéhyde | 25 |
| γ-Dodécalactone | 40 |
| γ-Undécalactone | 20 |
| γ-Décalactone | 20 |

(suite)

| Ingrédients | Parties en poids |
|---|---|
| Sulfox® 1) (à 1% dans le propylène glycol) | 25 |
| Acétate d'éthyle | 100 |
| Hexanal | 15 |
| Acétate de benzyle | 25 |
| Propylène glycol | 700 |
| 2,5,6-Triméthyl-2-heptanol | 30 |
| Total | 1000 |

1) 8-mercapto-3-p-menthanone ; origine : Firmenich SA, Genève, Suisse

Exemple 7

Préparation d'un arôme de thé

On a mélangé les ingrédients suivants pour obtenir un arôme au goût de thé :

| Ingrédients | Parties en poids |
|---|---|
| Benzaldéhyde | 5 |
| β-Damascone (à 1% dans le propylène glycol) | 40 |
| γ-Heptalactone | 10 |
| (E)-2-Hexénol | 5 |
| Oxyde de linalyle | 25 |
| Phényléthanol | 5 |
| (Z)-3-Hexénol | 10 |
| β-Ionone (à 10% dans le propylène glycol) | 10 |
| Terpinèn-4-ol | 10 |
| Propylène glycol | 815 |
| 2,5,6-Triméthyl-2-heptanol | 65 |
| Total | 1000 |

**Revendications**

1. Utilisation du 2,5,6-triméthyl-2-heptanol en tant qu'ingrédient parfumant ou aromatisant.

2. Utilisation selon la revendication 1, **caractérisée en ce que** le 2,5,6-triméthyl-2-heptanol est utilisé sous forme d'un racémate, de l'un de ses énantiomères de configuration (R) ou (S), ou d'un mélange contenant une quantité prépondérante de l'un de ces énantiomères.

3. Composition parfumante contenant à titre d'ingrédient parfumant le 2,5,6-triméthyl-2-heptanol sous forme d'un racémate, de l'un de ses énantiomères de configuration (R) ou (S), ou d'un mélange contenant une quantité prépondérante de l'un de ces énantiomères, **caractérisée en ce que** le 2,5,6-triméthyl-2-heptanol est utilisé dans une concentration comprise entre 1 et 20% en poids par rapport au poids total de la composition.

4. Article parfumé contenant à titre d'ingrédient parfumant le 2,5,6-triméthyl-2-heptanol sous forme d'un racémate, de l'un de ses énantiomères de configuration (R) ou (S), ou d'un mélange contenant une quantité prépondérante de l'un de ces énantiomères.

5. Article parfumé selon la revendication 4, sous forme d'un parfum ou d'une eau de toilette, d'un savon, d'un gel de douche ou de bain, d'un shampoing ou autre produit d'hygiène capillaire, d'un déodorant ou antiperspirant, d'un désodorisant d'air ambiant, d'une préparation cosmétique, d'un détergent ou d'un adoucissant textile, ou d'un produit d'entretien.

6. Composition aromatisante, contenant le 2,5,6-triméthyl-2-heptanol en tant qu'ingrédient aromatisant dans une concentration comprise entre 1 et 20% en poids par rapport au poids total de la composition.

7. Article aromatisé, contenant le 2,5,6-triméthyl-2-heptanol en tant qu'ingrédient aromatisant.

8. Article aromatisé selon la revendication 6 ou 7, sous forme d'un aliment ou une boisson, d'une gomme à mâcher ou d'une préparation pharmaceutique.

9. (R)-2,5,6-Triméthyl-2-heptanol ou (S)-2,5,6-triméthyl-2-heptanol.

## Patentansprüche

1. Verwendung von 2,5,6-Trimethyl-2-heptanol als Duft- oder Aromastoff.

2. Verwendung nach Anspruch 1, **dadurch gekennzeichnet, daß** das 2,5,6-Trimethyl-2-heptanol in Form eines Racemats, eines seiner (R)- oder (S)-Konfigurationsenantiomeren oder einer Mischung verwendet wird, die eine überwiegende Menge eines dieser Enantiomeren enthält.

3. Duftstoffzusammensetzung, enthaltend 2,5,6-Trimethyl-2-heptanol als Duftstoff in Form eines Racemats, eines seiner (R)- oder (S)-Konfigurationsenantiomeren oder einer Mischung, die eine überwiegende Menge eines dieser Enantiomeren enthält, **dadurch gekennzeichnet, daß** das 2,5,6-Trimethyl-2-heptanol in einer Konzentration zwischen 1 und 20 Gew.-% verwendet wird, bezogen auf das Gesamtgewicht der Zusammensetzung.

4. Parfümierter Artikel, enthaltend 2,5,6-Trimethyl-2-heptanol als Duftstoff in Form eines Racemats, eines seiner (R)- oder (S)-Konfigurationsenantiomeren oder einer Mischung, die eine überwiegende Menge eines dieser Enantiomeren enthält.

5. Parfümierter Artikel nach Anspruch 4 in Form eines Parfüms oder eines Eau de Toilette, einer Seife, eines Dusch- oder Badegels, eines Shampoos oder eines anderen Haarpflegeprodukts, eines Deodorants oder Antitranspirants, eines Raumlufterfrischers, eines Kosmetikpräparats, eines Waschmittels oder eines Weichspülers oder eines Pflegeprodukts.

6. Aromazusammensetzung, enthaltend 2,5,6-Trimethyl-2-heptanol als Aromastoff in einer Konzentration zwischen 1 und 20 Gew.-%, bezogen auf das Gesamtgewicht der Zusammensetzung.

7. Aromatisierter Artikel, enthalten 2,5,6-Trimethyl-2-heptanol als Aromastoff.

8. Aromatisierter Artikel nach Anspruch 6 oder 7 in Form eines Nahrungsmittels oder Getränks, eines Kaugummis oder eines pharmazeutischen Präparats.

9. (R)-2,5,6-Trimethyl-2-heptanol oder (S)-2,5,6-Trimethyl-2-heptanol.

## Claims

1. Use as perfuming or flavouring ingredient of 2,5,6-trimethyl-2-heptanol.

2. Use according to claim 1, **characterized in that** 2,5,6-trimethyl-2-heptanol is used in the form of its racemate, in the form of one of its enantiomers of configuration (R) or (S), or in the form of a mixture containing a preponderant amount of one of these enantiomers.

3. Perfuming composition, containing as perfuming ingredient 2,5,6-trimethyl-2-heptanol in the form of its racemate, in the form of one of its enantiomers of configuration (R) or (S), or in the form of a mixture containing a preponderant amount of one of these enantiomers, **characterized in that** 2,5,6-trimethyl-2-heptanol is used in a concentration comprised between 1 to 20% by weight based on the total weight of the composition.

4. Perfumed article containing as perfuming ingredient 2,5,6-trimethyl-2-heptanol in the form of a racemate, in the

form of one of its enantiomers of configuration (R) or (S), or in the form of a mixture containing a preponderant amount of one of these enantiomers.

**5.** Perfumed article according to claim 4, in the form of a perfume or a cologne, a soap, a bath or shower gel, a shampoo or other hair care product, a body deodorant or antiperspirant, an air freshener, a cosmetic preparation, a fabric detergent or softener, or an all-purpose household cleaner.

**6.** A flavouring composition containing as flavouring ingredient 2,5,6-trimethyl-2-heptanol in a concentration of from 1 to 20% by weight based on the total weight of the composition.

**7.** Flavoured article, containing as flavouring ingredient 2,5,6-trimethyl-2-heptanol.

**8.** A flavoured article according to claim 7, in the form of a food or beverage, a chewing gum or a pharmaceutical preparation.

**9.** (R)-2,5,6-Trimethyl-2-heptanol or (S)-2,5,6-trimethyl-2-heptanol